# EUROPEAN PATENT SPECIFICATION

(11) **EP 1 674 307 B1**
(45) Date of publication and mention of the grant of the patent: **17.10.2007**
(21) Application number: 05026759.0
(22) Date of filing: 07.12.2005
(51) Int. Cl.: B60G 21/05

(54) **Axle suspension apparatus**
Achsaufhängungsvorrichtung
Dispositif de suspension d'essieu

(30) Priority: 21.12.2004 JP 2004369867
(43) Date of publication of application: 28.06.2006
(73) Proprietor: Toyota Jidosha Kabushiki Kaisha, Toyota-shi, Aichi-ken, 471-8571 (JP)
(72) Inventor: Murata, Satoshi, Toyota-shi Aichi-ken 471-8571 (JP)
(74) Representative: Winter, Brandl, Fürniss, Hübner Röss, Kaiser, Polte Partnerschaft Patent- und Rechtsanwaltskanzlei

(56) References cited:
- EP-A- 0 122 891
- EP-A- 0 458 665
- EP-A- 0 487 089
- EP-A- 0 733 501
- DE-C1- 4 445 995
- FR-A- 2 016 544
- FR-A- 2 547 540
- US-A- 2 989 133
- US-A- 4 434 998
- US-A1- 2003 141 757
- PATENT ABSTRACTS OF JAPAN vol. 1999, no. 12, 29 October 1999 (1999-10-29) & JP 11 198623 A (TOYOTA MOTOR CORP), 27 July 1999 (1999-07-27)

## Description

### BACKGROUND OF THE INVENTION

### 1. Field of the Invention

The present invention generally relates to suspensions of vehicles and, more particularly, to an axle suspension apparatus of a vehicle.

### 2. Description of the Related Art

There are various kinds of the suspensions of vehicles so that an appropriate kind of suspension is selected and used in accordance with requirements of drivability, a ride comfort characteristic or a vibration characteristic of vehicles. As one of the suspensions of vehicles, there is a torsion beam type suspension having a trailing arm and a torsion beam connected to the trailing arm by welding. The torsion beam type suspension is widely used as an axle suspension apparatus of rear wheels of small or middle size automobiles.

In the torsion beam type suspension, it is required for the torsion beam to have rigidity with respect to a side force applied when turning or a torsion force applied when running over an unevenness of a road surface. Accordingly, when designing the torsion beam type suspension, it is required to sufficiently consider a balance between rigidity and flexibility of structural components. Japanese Laid-Open Patent Application No. 2003-525158 discloses a torsion beam type suspension that generates a torque in response to torsion by using an elastic member and also provides flexibility.

Japanese Laid-Open Patent Application No. 11-198623 shows a suspension system comprising trailing arms, wherein each front end of the trailing arms is rotatably connected to an end of a beam and the rear wheels are attached to the rear end of each trailing arm.

The suspension system of EP 122 891 A1 shows a beam that is connected to respective trailing arms by interposing a sleeve of elastomeric material there between such that the beam is subject to bending only, since any torsion is absorbed by deformation of the elastomeric material.

US 4,434,998 shows a rear wheel suspension including trailing arms that are pivoted at their forward end on the body and carry wheels at their rearward end, wherein beam is connected to each trailing arm between the body pivot and the wheel axis. The connection of the beam and the trailing arm permit a relative rotation between each control arm and the respective connected end of the beam along an axis which extends obliquely to the trailing arm. A similar arrangement is also shown in JP 2001-039136.

In the torsion beam type suspension, a position of a shear center of the torsion beam gives a considerable influence to an alignment change, and determines a performance and characteristic of the suspension. In order to realize an optimum alignment change, it is necessary to adjust the position of the shear center of the torsion beam by changing a connecting position between the torsion beam and the trailing arm. However, since there is a physical limitation such as a vehicle body shape, an arm shape or a beam bending shape, it is not easy to change the connecting position between the torsion beam and the trailing arm to match a design target of alignment.

### SUMMARY OF THE INVENTION

It is a general object of the present invention to provide an improved and useful axle suspension apparatus in which the above-mentioned problems are eliminated.

A more specific object of the present invention is to provide an axle suspension apparatus which has a large freedom of design to permit setting of an optimum alignment change.

In order to achieve the above-mentioned objects, there is provided according to the present invention an axle suspension apparatus comprising: a pair of left and right arms each having a vehicle support part supported on a vehicle body and a wheel support part supporting a wheel; and a beam provided between said left and right arms, both ends of the beam being rotatably connected to the respective left and right arms between the vehicle body support part and the wheel support part of each arm, wherein rotation axes of the both ends of said beam are at angles with respect to a line connecting the both ends of said beam and a middle part of the beam extends along a line connecting the vehicle support parts supported on said vehicle body.

According to the present invention, an optimum alignment change can be set easily by adjusting the orientation of the rotation axes of both ends of the beam. There is no need to change the connecting positions between the beam and the arms and the shape of the beam in accordance with a design target of the alignment, a freedom of design is increased.

In the axle suspension apparatus according to the present invention, a middle part of said beam extends along a line connecting said parts supported on said vehicle body. That is, the beam may be bent so that a middle part of the beam extends along a line connecting the parts supported on the vehicle body. Accordingly, the middle part of the beam does not swing up and down even at the time of the same phase stroke or opposite phase stroke of the left and right wheels. Thus, there is no need to reserve a space to permit the movement of the middle part of the beam, and a freedom of design in the positional relationship with surrounding components of the vehicle is increased.

The axle suspension apparatus according to the present invention may further comprise a stabilizer bridged between said left and right arms. The stabilizer increases torsion rigidity of the suspension at the time of opposite phase stroke.

Additionally, the axle suspension apparatus according to the present invention may further comprise a bush provided between each end of said beam and a respective one of said left and right arms, the bush including an elastic member that roatatably connects each end of said beam to the respective one of said left and right arms. Accordingly, the beam can rotate freely at the connecting part to the arms due to the bush interposed between the beam and the arms, and a shock from a road surface can be absorbed by the elastic material constituting the bush.

Alternatively, the axle suspension apparatus according to the present invention may further comprise a bearing provided between each end of said beam and a respective one of said left and right arms, the bearing roatatably connecting each end of said beam to the respective one of said left and right arms. Accordingly, the beam can rotate freely at the connecting part to the arms due to the bearing interposed between the beam and the arms.

In the axle suspension apparatus, an orientation of the rotation axes of the both ends of said beam may be set in accordance with a target alignment change. In order to achieve an optimum drive stability or ride comfort of the vehicle with respect to an alignment change such as a can be change or a toe change due to a shock or a vibration transmitted from a road surface, the orientation of the axes of both ends of the beam is adjusted so that an optimum suspension mechanism can be designed easily.

In the axle suspension apparatus according to the present invention, said beam may be bent so as to avoid said beam from interfering with components surrounding said beam. Setting of an optimum alignment change does not depend on the shape of the beam but depends on the orientation of the rotation axes of both ends of the beam. When mounting the axle suspension apparatus on the vehicle, interference of the beam with the surrounding components can be avoided by bending the beam in accordance with the positional relationship with the surrounding components of the vehicle. Thus, it is not necessary to sacrifice a freedom of design of the components surrounding the beam.

Other objects, features and advantages of the present invention will become more apparent from the following detailed description when read in conjunction with the accompanying drawings.

### BRIEF DESCRIPTION OF THE DRAWINGS

FIG. 1 is a plan view of a torsion beam type suspension provided in a vehicle;
FIG. 2 is a side view of the torsion beam type suspension shown in FIG. 1;
FIG. 3 is a perspective view of an axle suspension apparatus according to a background art of the present invention;
FIG. 4 is an illustration showing a structure of a coupling part, which connects a beam to a trailing arm;
FIG. 5 is a cross-sectional view showing an internal structure of the coupling part shown in FIG. 4;
FIG. 6 is an illustration showing a structure of a coupling part, which connects a beam to a trailing arm;
FIG. 7 is a cross-sectional view showing an internal structure of the coupling part shown in FIG. 6;
FIG. 8 is a perspective view of an axle suspension apparatus according to an embodiment of the present invention;
FIG. 9 is a perspective view of an axle suspension apparatus according to a further background art of the present invention; and
FIG. 10 is a plan view of a part of a vehicle in which the axle suspension apparatus according to one of the background arts of the present invention is mounted on a vehicle.

### DETAILED DESCRIPTION OF THE PREFERRED EMBODIMENT

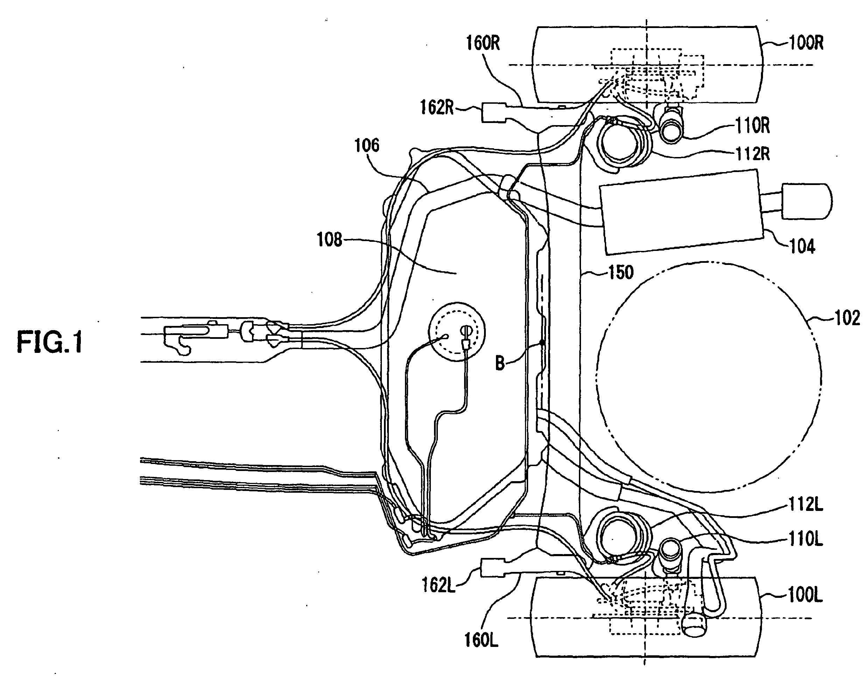

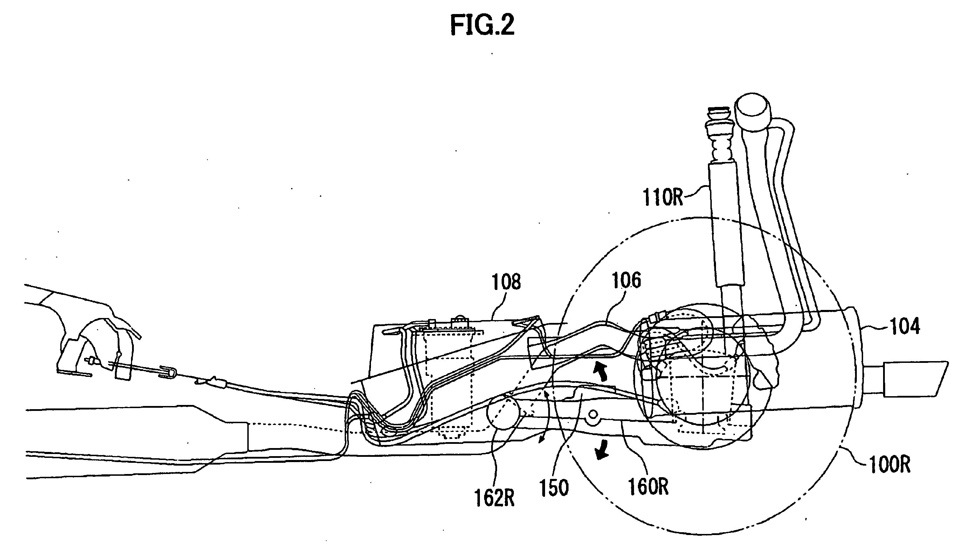

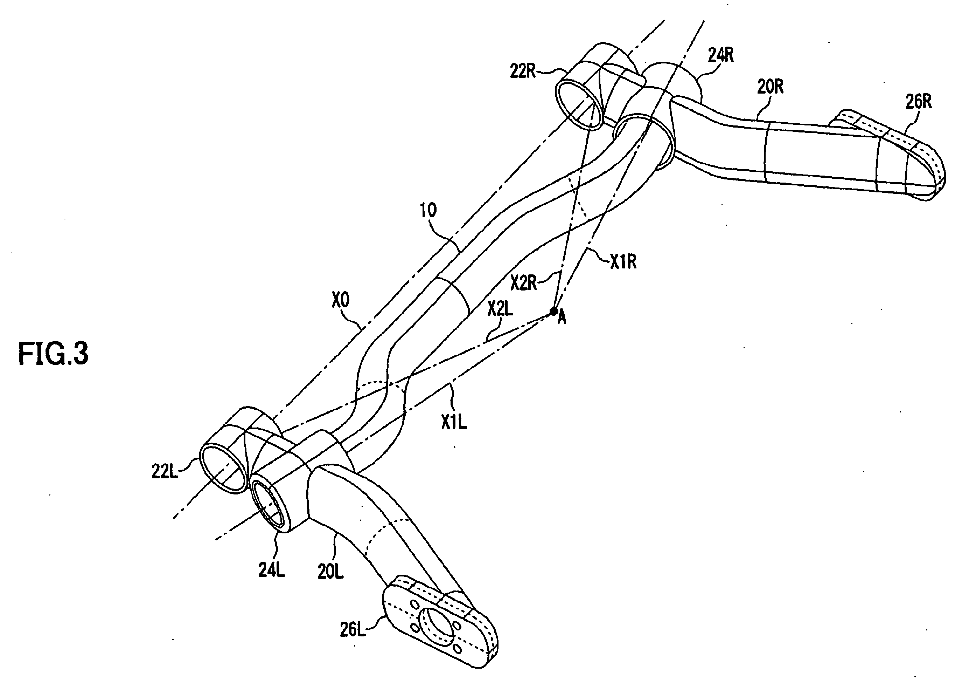

A description will now be given, with reference to FIGS. 1 and 2, of a torsion beam type suspension. FIG. 1 is a plan view of a torsion beam type suspension provided in a vehicle. FIG. 2 is a side view of the torsion beam type suspension shown in FIG. 3.

The torsion beam type suspension includes left and right trailing arms 160L and 160R extending in a longitudinal direction of the vehicle. Bushes 162L and 162R having elastic members are coupled to front ends of the left and right trailing arms 160L and 160R, respectively, so as to be swingably supported on a vehicle body. On the other hand, axle bearings are attached to rear ends of the left and right trailing arms 160A and 160R so as to rotatably support the wheels 100L and 100R, respectively. Additionally, shock absorbers 110L and 110R and coil springs 112L and 112R are attached to the left and right trailing arms 160L and 160R in the vicinity of the rear ends thereof, respectively.

A torsion beam 150 is provided between the left and right trailing arms 160L and 160R so as to connect middle portions of the left and right trailing arms 160L and 160R. Left and right ends of the torsion beam 150 are welded to the left and right trailing arms 160L and 160R, respectively.

When the vehicle equipped with the torsion beam type suspension runs on a road surface having an unevenness, the left and right wheels vibrates up and down. If the unevenness on the road surface is in the same phase on the left and right sides, the left and right wheels vibrate in the same phase. If the unevenness on the road surface is in opposite phase on the left and right sides, the left and right wheels vibrate up and down in opposite phase. Additionally, even when the vehicle is running on a flat road surface, the vehicle body rolls due to a centrifugal force when the vehicle turns, which causes the left and right wheels to vibrate up and down in opposite phase.

The above-mentioned up and down vibration of the wheels are transmitted to the left and right trailing arms 160L and 160R. If they are the same phase stroke, the left and right trailing arms 160L and 160R and the torsion beam 150 entirely swing about a line connecting the bushes 162L and 162R on the front ends of the left and right trailing arms 160L and 160R, and shocks are absorbed by the coil springs 112L and 112R and the shock absorbers 110L and 110R.

On the other hand, if they are in opposite phase stroke, the left and right trailing arms 160L and 160R move in opposite directions each other, which causes a torsion in the torsion beam 150. Thus, a counter force to return the torsion is generated so as to prevent the vehicle from rolling.

In the design of the torsion beam type suspension, a position of a shear center of the torsion beam, which gives a considerable influence to an alignment change, is an important index. In the example of FIG. 1, if the cross-section of the torsion beam 150 has a U-shape which opens rearward, a point B immediately in front of the torsion beam 150 in the middle of the torsion beam 150 is the shear center. In this case, the performance and characteristic of the suspension remarkably changes in accordance with the position of the shear center B.

In a case where the shear center B of the torsion beam 150 is set to a point A, which is behind the point B, so as to achieve an optimum alignment change, it may be difficult to displace the torsion beam 150 rearward depending on a positional relationship with a spare-tire house 102 or a muffler 104. On the other hand, in a case where the shear center B of the torsion beam 150 is set to a point, which is ahead of the point B, it may be difficult to displace the torsion beam 150 due to a relationship with a fuel tank 108. Similarly, in a case where the shear center B of the torsion beam 150 is set to a point, which is above or under the point B, an exhaust pipe 106 or the like may be an obstacle to the displacement of the torsion beam 150.

Moreover, when the wheels bound and rebound, the left and right trailing arms 160L and 160R swing about a rotational axis connecting the left and right bushes 162L and 160R as indicated by arrows in FIG. 1. With the swing of the left and right trailing arms 160L and 160R, the torsion beam 150 moves up and down. Accordingly, it is necessary to consider the arrangement to maintain a space between the torsion beam 150 and the exhaust pipe 106 by bending the exhaust pipe 106 upward so that the torsion beam 150 does not contact with the exhaust pipe 106 even when the torsion beam 105 moves up and down.

As mentioned above, in the torsion beam type suspension of rear wheels, there are various components around the torsion beam 150, such as the spare-tire house 102, the muffler 104, the exhaust pipe 106, the fuel tank 108, etc, and there may be a physical limitation given by those components when determining arrangement and configuration of the torsion beam 150. Thus, there may be a case where it is difficult to achieve an ideal alignment change. Additionally, there may occur a situation where arrangement and configuration of the surrounding components must be changed to achieve an optimum alignment change.

The applicant recognized that there are the above-mentioned problems in the torsion beam type suspension, and made the present invention. A description will be given below, with reference to the drawings, of a structure of an axle suspension apparatus according to an background art of the present invention.

FIG. 3 is a perspective view showing a structure of an axle suspension apparatus according to a background art of the present invention. In the axle suspension apparatus, a pair of left and right trailing arms 20L and 20R extend separately in a longitudinal direction of the vehicle. A beam 10 extends in a direction of width of the vehicle and is bridged between the left and right trailing arms 20L and 20R so as to connect the left and right trailing arms 20L and 20R. The left and right trailing arms 20L and 20R include vehicle body support parts 22L and 22R, coupling parts 24L and 24R, and wheel support parts 26L and 26R, respectively. Both ends (left and right ends) of the beam 10 are rotatably connected to connection parts 24L and 24R provided in the middle of the left and right trailing arms 20L and 20R, respectively.

The body support parts 22L and 22R provided on front ends of the left and right trailing arms 20L and 20R are trailing arm bushes, as an example, and are attached to the vehicle body via elastic members. Thereby, the left and right trailing arms 20L and 20R are swingably supported on the vehicle body. Axle bearings, which rotatably support left and right wheels, are attached to the wheel support parts 26A and 26B provided on rear ends of the left and right trailing arms 20L and 20R, respectively.

The coupling parts 24L and 24R of the left and right trailing arms 20L and 20R are provided not perpendicular to but oblique to the arm axis, respectively. Consequently, rotation axes X1L and X1R of the coupling parts 24L and 24R, which rotatably support the beam 10, are not parallel to a direction of width of the vehicle body but at angles with respect to the direction of width of the vehicle. That is, the rotation axes X1L and X1R of the left and right ends of the beam 10 are offset with respect to a straight line X0, which connects center points of the body support parts 22L and 22R of the left and right trailing arms 20L and 20R, and have a fixed angle with respect to the line X0 connecting the body support parts 22L and 22R. The angle which makes rotation axes X1L and X1R of the left and right ends of the beam 10 offset from the direction of width of the vehicle is determined according to suspension mechanism design aiming at an optimum geometric alignment change.

If the wheels attached to the wheel support parts 26L and 26R of the left and right trailing arms 20L and 20R via the axle bearings are displaced up and down in the same phase, the left and right trailing arms 20L and 20R swing in the same phase with the straight line X0, which connects the left and right body support parts 22L and 22R, as an axis. That is, the straight line X0, which connects the body support parts 22L and 22R of the left and right trailing arms 20L and 20R, serves as a swing axis at the time of in-phase stroke.

On the other hand, when the left and right wheels are displaced up and down in opposite phase and a stroke difference is generated between the left and right wheels, the left and right trailing arms 20L and 20R swing in opposite phase. Here, an intersection A of the rotation axes X1L and X1R of the left and right ends of the beam 10 is referred to as "left and right rotation axes intersection". For example, when the right wheel bounds and the left wheel rebounds, the right trailing arm 20R swings upward with a straight line X2R, which connects the left and right rotation axes intersection A and the center of the right body support part 22R, as an axis of swing, while the left trailing arm 20L swings downward with a straight line X2L, which connects the left and right rotation axes intersection A and the center of the left body support part 22L, as an axis of swing. The straight line X2R, which connects the left and right rotation axes intersection A and the center of the right body support part 22R, and the straight line X2L, which connects the left and right rotation axes intersection A and the center of the left body support part 22L, serve as axes of swing at the time of opposite phase stroke.

When the left and right rotation axes intersection A is located above the center points of the body support parts 22L and 22R of the left and right trailing arms 20L and 20R, a roll-steer generated at the time of opposite phase stroke can be inclined to an understeer, which changes the wheels when rolled in a toe-in direction to achieve a good turning characteristic. On the other hand, when the left and right rotation axes intersection A is located at further rear position, that is, for example, a position near rotation axes of the left and right wheels, an absolute camber change can be suppressed to be small even if the vehicle rolls at the time of opposite phase stroke. Thus, the positions above and under and front and rear of the left and right rotation axes intersection A are extremely important factors in adjusting alignment of a vehicle underbody.

The position of the left and right rotation axes intersection A can be adjusted freely by changing orientation of the rotation axes X1L and X1R of the left and right ends of the beam 10. Accordingly, there is no need to change the connecting positions between the beam 10 and the trailing arms 20L and 20R or change the shape of the beam 10 when setting an alignment.

Moreover, even if the left and right trailing arms 20L and 20R swing in opposite phase, the beam itself is not twisted. This is because the beam 10 is not welded to the left and right trailing arms 20L and 20R but rotatably supported by the coupling parts 24L and 24R. In this regard, the present embodiment essentially differs from a torsion beam type suspension in which a torsion beam is welded to trailing arms and the torsion beam share the burden of torsion rigidity. The beam 10 according to the present embodiment is not a member which deforms by torsion, and can be considered as a rigid member which is not twisted.

Since the beam 10 is not twisted, a freedom in selection of materials is high. Moreover, since the beam 10 is not welded to be connected to the left and right trailing arms 20L and 20R, material of both can be selected irrespective of their welding strength. For example, the beam 10 and the left and right trailing arms 20L and 20R can be formed in form of a pipe by a material such as aluminum or the like.

Moreover, since the beam 10 does not share torsion rigidity, a freedom in its shape is high and there is no problem if a bent portion exists in the middle of the beam 10. Accordingly, the beam 10 can be bent in an appropriate shape so as to avoid interference with various components of the vehicle arranged around the beam 10, which increases a freedom of design.

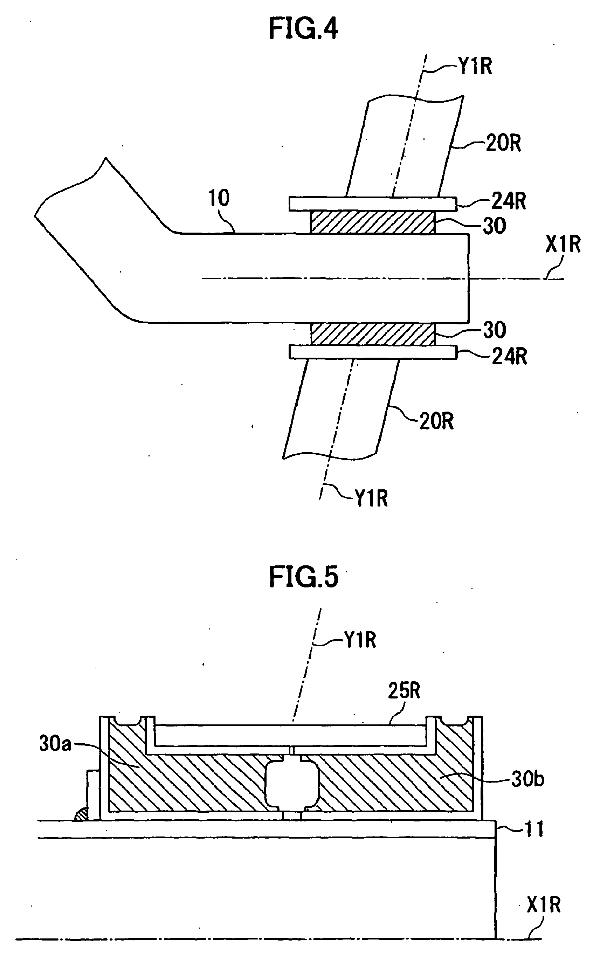

A description will now be given, with reference to FIG. 4 and FIG. 5, of a structure of the coupling parts 24L and 24R, which connect the beam 10 with the left and right trailing arms 20L and 20R. Here, the structures of the left and right coupling parts 24L and 24R of the left and right trailing arms 20L and 20R are identical to each other, and, thus, a description will be given of only the right trailing arm 20R.

FIG. 4 illustrates the structure of the coupling part 24R which connects the beam 10 to the trailing arm 20R. The rotation axis X1R of the beam 10 and the center axis Y1R of the tight trailing arm 20 are not perpendicular to each other but the beam 10 is obliquely connected to the right trailing arm 20R. A bush 30 is provided between the beam 10 and the coupling part 24R of the trailing arm 20R so that the beam 10 is rotatably supported by the coupling part 24R of the right trailing arm 20R.

FIG. 5 is a cross-sectional view showing an internal structure of the coupling part 24R shown in FIG. 4. Two pieces of bushes 30a and 30b are provided between a pipe 11 of the right trailing arm 20R and a tube 25R of the coupling part 24R so that the pipe 11 of the beam side and the tube 25R of the trailing arm side are elastically connected with each other. Since the pushes 30a and 30b made of an elastic material such as rubber is interposed, the beam 10 can rotate smoothly about the rotation axis X1R in a state where the beam 10 is retained by the coupling part 24R of the right trailing arm 20R. Additionally, a vibration from a road surface can be absorbed by an elastic deformation of bushes 30a and 30b made of an elastic material such as rubber.

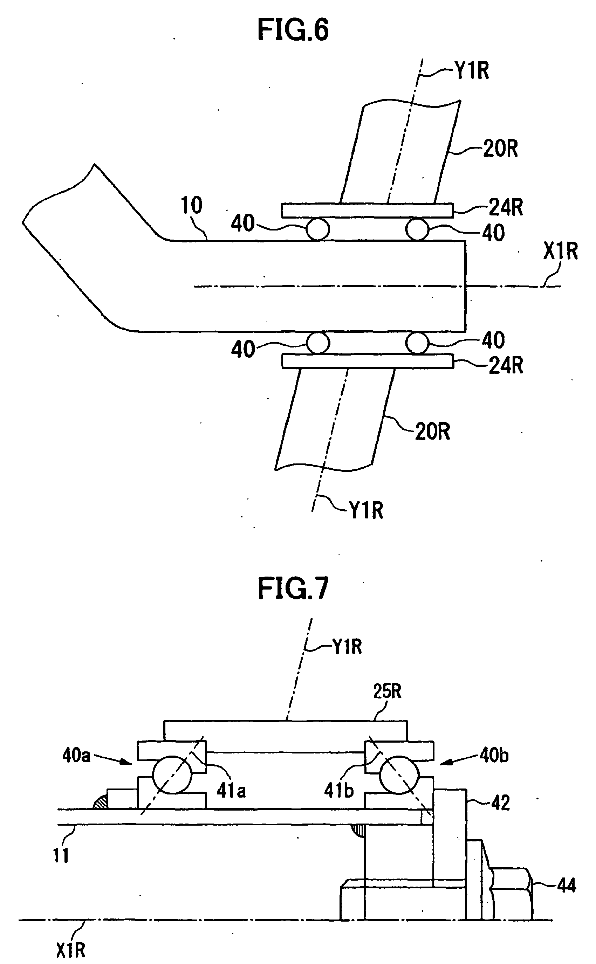

A description will now be given, with reference to FIG. 6 and FIG. 7, of another structure of the coupling parts 24L and 24R, which connect the beam 10 to the left and right trailing arms 20R and 20L. In the example of FIG. 4 and FIG. 5, the bushes are used in the left and right coupling parts 24L and 24R, the example of FIG. 6 and FIG. 7 uses bearings instead of the bushes. The structures of the left and right coupling parts 24L and 24R are identical to each other, and a description will be given of only the right trailing arm 20R.

FIG. 6 is an illustration showing an internal structure of the coupling part 24R, which connects the beam 10to the right trailing arm 20R. Unlike the structure shown in FIG. 4, an angular bearing 40 is provided between the beam 10 and the coupling part 24R of the right trailing arm 20R so that the beam 10 is rotatably connected to the coupling part 24R of the trailing arm 20R.

FIG. 7 is a cross-sectional view showing an internal structure of the coupling part 24R shown in FIG. 6. Angular bearings 40a and 40b are provided on both sides of the tube 25R between the pipe 11 of the beam 10 and the tube 25R of the coupling part 24R. The angular bearings 40a and 40b are fixed by a washer 42 and a bolt 44 together with the tube 25R so that the pipe 11on the beam side is rotatably connected to the tube 25R on the trailing arm side. The angular bearings 40a and 40b retain balls as rolling members with contact angles indicated by reference numbers 41 a and 41b. Due to the action of the angular bearings 40a and 40b, the beam 10 can be rotated about the rotation axis X1R smoothly in a state where the beam 10 is held by the coupling part 24R of the right trailing arm 20R.

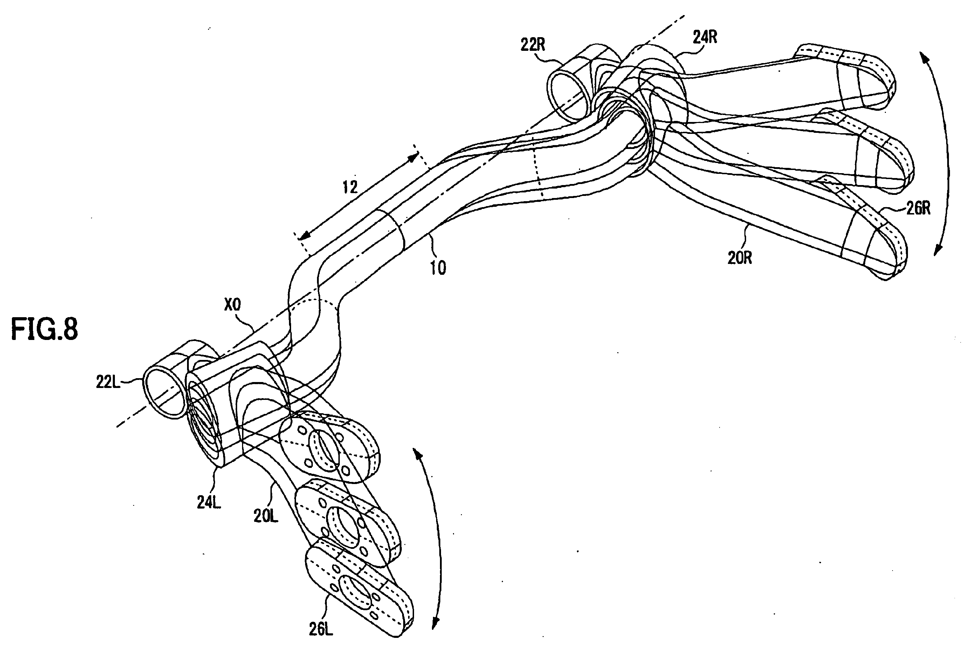

FIG. 8 is a perspective view of an axle suspension apparatus according to an embodiment of the present invention. In the axle suspension apparatus according to the present embodiment, the beam 10 is bent so that a middle part 12 of the beam 10 is located on and extends along the in-phase stroke swing axis X0, which connect the center of the vehicle body support parts 22L and 22R. According to this structure, when the left and right wheels are displaced up and down in the same phase and the left and right trailing arms 30L and 20R swing in the same phase with the in-phase stroke swing axis X0 as an axis of swing, the middle part 12 of the beam 10 does not move since the middle part is on the in-phase stroke swing axis X0. On the other hand, when the left and right wheels are displaced up and down in opposite phase, the middle part 12 of the beam 10 is on the in-phase stroke swing axis X0 and hardly moves.

As explained with reference to FIG. 2, in the conventional torsion beam type suspension, it is necessary to reserve a space for the torsion beam 150 to swing up and down by bending the exhaust pipe 106 upward so as to avoid interference with the exhaust pipe 106 since the torsion beam 150 swings up and down at the time of the same phase stroke. In the axle suspension apparatus according to the present embodiment, the middle part 12 of the beam 10 is made coincide with the in-phase stroke swing axis X0 so that the middle part 12 of the beam 10 does not move at the time of the same phase stroke and also at the time of opposite phase stroke. Thereby, there is no need to reserve the space for movement of the beam 10, which further increases the freedom of design of a vehicle.

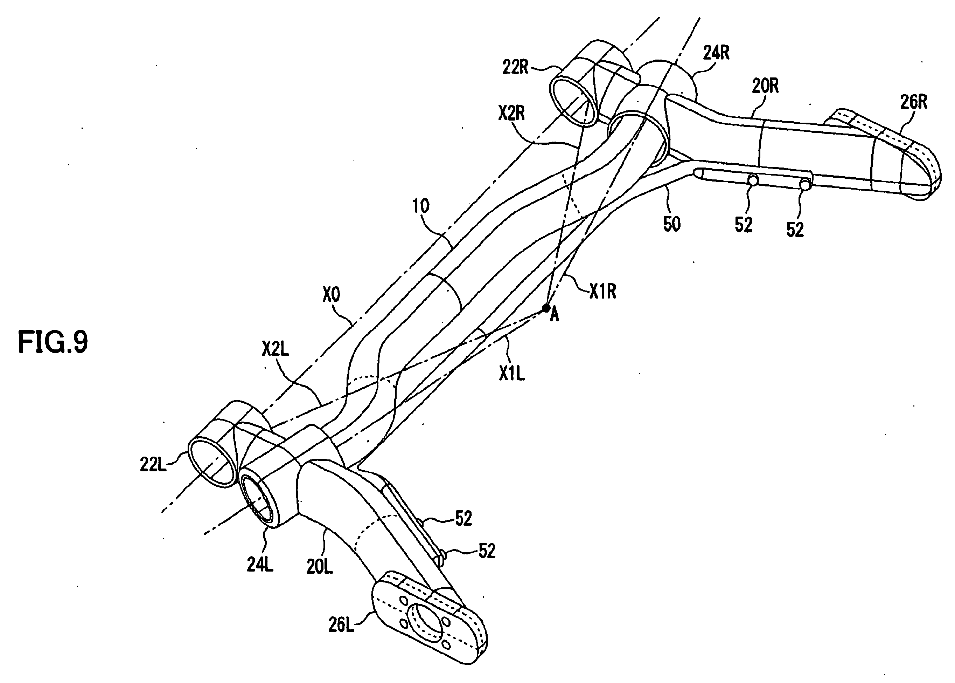

FIG. 9 is a perspective view of an axle suspension apparatus according to a further background art of the present invention. In the axle suspension apparatus, a stabilizer 50 is provided so as to increase torsion rigidity at the time of opposite phase stroke. Since the beam 10 is rotatably connected to the coupling parts 24L and 24R of the left and right trailing arms 20L and 20R, the beam 10 itself is not twisted even at the time of opposite phase stroke. Thus, in order to give sufficient torsion rigidity, the stabilizer 50 is bridged between the left and right trailing arms 20L and 20R. Both ends (opposite ends) of the stabilizer 50 are fixed to the left and right trailing arms 20L and 20R by bolts 52, respectively, so that the left and right trailing arms 20L and 20R are connected in the direction of width of the vehicle.

By providing the stabilizer 50, torsion rigidity is given to the pair of left and right trailing arms 20L and 20R. If the left and right trailing arms 20L and 20R swing in opposite phase such that, for example, the left trailing arm 20L swings upward with the opposite phase stroke swing axis X2L as an axis of swing and the right trailing arm 20R swings downward with the opposite phase stroke swing axis X2R as an axis of swing. A twist is generated in the stabilizer 50, which bridges between left and right trailing arms 20L and 20R. Thus, a counter force to return the twist is applied to the left and right trailing arms 20L and 20R. Thereby, the vibration of the left and right wheels in opposite phase is reduced and roll of the wheels is suppressed, which further improves the turning characteristic.

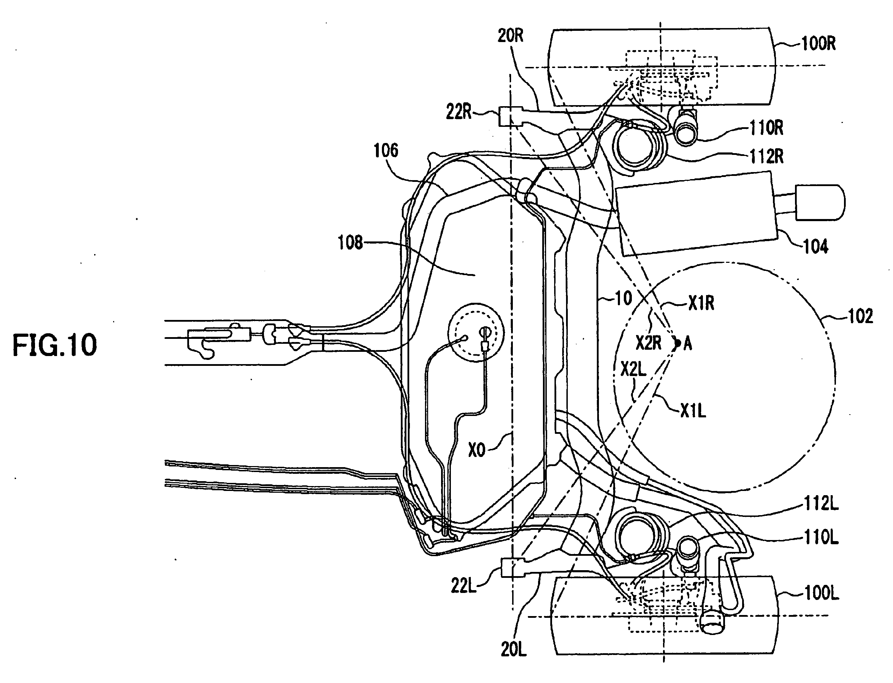

FIG. 10 is a plan view showing an example in which the axle suspension apparatus according to one of the background arts is mounted on a vehicle. In the example shown in FIG. 10, the left and right rotation axes intersection A of the beam 10 is located behind the beam 10 in the rear of the vehicle so as to achieve an optimum alignment change. Although the left and right rotation axes intersection A is located in the spare-tire house 102, there is no need to change the connecting positions of the beam 10 to the left and right trailing arms 20L and 20R since the left and right rotation axes intersection A can be set to that position by merely changing the rotation axes X1L and X1R of the left and right ends of the beam 10.

Due to the rotation axes X1L andX1R of the left and right ends of the beam 10 being orientated toward the rear of the vehicle, the beam 10 is bent toward the rear of the without changes, which may cause the beam 10 to interfere with the muffler 104 or the spare-tire house 102. Thus, the middle part of the beam 10 is bent toward the front of the vehicle so as to avoid interference with the muffler 104 and the spare-tire house 102. Since the beam 10 does not share torsion rigidity, the beam 10 can be of an arbitrary shape. Since there is no need to change the positions and shapes of the components surrounding the beam 10 in the vehicle to achieve an optimum alignment change, there is no case where the freedom of design of the surrounding components is sacrificed.

Moreover, although the positional relationship of the left and right rotation axes intersection A relative to the center points of the vehicle body support parts 22L and 22R of the left and right trailing arms 20L and 20R in the upward and downward directions is adjusted so as to achieve an optimum alignment change, the vertical position of the left and right rotation axes intersection A can be changed by merely inclining the rotation axes X1L and X1R of the left and right ends of the beam 10 up and down without changing the position of the beam 10. Thus, an optimum alignment change can be achieved without changing arrangement and shape of the surrounding components such as the exhaust pipe 106 located above or under the beam 10.

As explained above, according to the axle suspension apparatuses of the above-mentioned embodiments, an optimum alignment change can be achieved by merely changing the orientation of the rotation axes X1L and X1R of the left and right ends of the beam 10 without changing the positions of the coupling parts 24L and 24R of the left and right trailing arms 20L and 20R. In other words, the design of the optimum alignment can be performed without being dependent on the connecting positions of the left and right trailing arms 20L and 20R and the shape of the beam 10.

Therefore, when mounting the axle suspension apparatus, the arrangement and shape of the beam 10 can be determined in accordance with the positional relationship with the surrounding components of the vehicle and an optimum alignment change can be determined by adjusting the orientation of the rotation axes of the left and right ends of the beam 10 independently from the arrangement and shape of the beam 10, which permits designing of the axle suspension apparatus without restrictions. Thus, a freedom in the suspension mechanism design is remarkably improved.

Since the intersection of the rotation axes of the left and right ends of the beam 10, which is important for achieving an optimum alignment change, can be set independently from the position and shape of the beam 10, a toe change or a camber change when a vehicle rolls can be designed optimally without restrictions of spaces in front of, behind, above or under the beam 10. Additionally, since the beam 10 is rotatably connected to the left and right trailing arms 20L and 20R and there is no weld-connection part, the beam 10 is not twisted at the time of opposite phase stroke and there is no influence given to a toe change or a camber change even if there is a bent portion in the middle of the beam 10. Further, since the beam 10 is not given a direct shock due to twisting, reliability of the axle suspension apparatus is improved.

Although the beam 10 is formed in a pipe shape so as to be easily bent, other forms may be used for the beam 10. Additionally, the left and right ends of the beam 10 are rotatably connected to the coupling parts 24L and 24R of the left and right trailing arms 20L and 20R, and the rotatable characteristic may be acquired by providing parts other than the bushes or bearings to the coupling parts 24L and 24R. Further, although the axle suspension apparatus is mounted to rear wheels of a vehicle in the above-mentioned example, the axle suspension apparatus may be mounted to front wheels.

## Claims

1. An axle suspension apparatus comprising:
a pair of left and right arms (20L, 20R) each having a vehicle body support part (22L, 22R) supported on a vehicle body and a wheel support part (26L, 26R) supporting a wheel (100L, 100R);
a beam (10) provided between said left and right arms (20L, 20R), both ends of the beam (10) being rotatably connected to the respective left and right arms (20L, 20R) between the vehicle body support part (22L, 22R) and the wheel support part (26L, 26R) of the each arm (20L, 20R);
rotation axes (X1L, X1R) of the both ends of said beam (10) being at angles with respect to a line connecting the both ends of said beam (10),
**characterized in that**
a middle part (12) of said beam (10) extends along a line (X0) connecting said vehicle body support parts (22L, 22R).

2. The axle suspension apparatus as claimed in claim 1, further comprising a stabilizer (50) bridged between said left and right arms (20L, 20R).

3. The axle suspension apparatus as claimed in claim 1 or 2, further comprising a bush (30) provided between each end of said beam (10) and a respective one of said left and right arms (20L, 20R), the bush (30) including an elastic member that roatatably connects each end of said beam (10) to the respective one of said left and right arms (20L, 20R).

4. The axle suspension apparatus as claimed in claim 1 or 2, further comprising a bearing (40) provided between each end of said beam (10) and a respective one of said left and right arms (20L, 20R), the bearing (40) rotatably connecting each end of said beam (10) to the respective one of said left and right arms (20L, 20R).

5. The axle suspension apparatus as claimed in one of claims 1 to 4, wherein said beam (10) is bent so as to avoid said beam (10) from interfering with components surrounding said beam (10).

## Patentansprüche

1. Achsaufhängungsvorrichtung mit
einem Paar von linken und rechten Lenkern (20L, 20R), wovon jeder ein Fahrzeugkarosseriestützteil (22L, 22R), welches an einer Fahrzeugkarosserie abgestützt ist, und ein Radstützteil (26L, 26R) hat, welches ein Rad (100L, 100R) stützt; und
einem Träger (10), welcher zwischen den rechten und linken Lenkern (20L, 20R) vorgesehen ist, wobei beide Enden des Trägers (10) mit dem jeweiligen rechten und linken Lenker (20L, 20R) zwischen dem Fahrzeugkarosseriestützteil (22L, 22R) und dem Radstützteil (26L, 26R) jedes Lenkers (20L, 20R) drehbar verbunden sind; wobei
sich die Rotationsachsen (X1L, X1R) der beiden Enden des Trägers (10) in Winkeln zu einer Linie befinden, welche die beiden Enden des Trägers (10) verbindet,
**dadurch gekennzeichnet, dass**
sich ein Mittelteil (12) des Trägers (10) entlang einer Linie (X0) erstreckt, welche die Fahrzeugkarosseriestützteile (22L, 22R) verbindet.

2. Achsaufhängungsvorrichtung gemäß Anspruch 1, ferner **gekennzeichnet durch** einen Stabilisator (50), welcher zur Überbrückung zwischen den rechten und linken Lenkern (20L, 20R) geschaltet ist.

3. Achsaufhängungsvorrichtung gemäß Anspruch 1 oder 2, ferner **gekennzeichnet durch** eine Buchse (30), welche zwischen jedem Ende des Trägers (10) und dem jeweiligen linken und rechten Lenker (20L, 20R) vorgesehen ist, wobei die Buchse (30) ein elastisches Teil enthält, welches jedes Ende des Trägers (10) mit dem jeweiligen rechten und linken Lenker (20L, 20R) drehbar verbindet.

4. Achsaufhängungsvorrichtung gemäß Anspruch 1 oder 2, ferner **gekennzeichnet durch** eine Lagerung (40), welche zwischen jedem Ende des Trägers (10) und dem jeweiligen linken und rechten Lenker (20L, 20R) vorgesehen ist, wobei die Lagerung (40) jedes Ende des Trägers (10) mit dem jeweiligen rechten und linken Lenker (20L, 20R) drehbar verbindet.

5. Achsaufhängungsvorrichtung gemäß einem der Ansprüche 1 bis 4, wobei der Träger (10) gebogen ist, um zu vermeiden, dass der Träger (10) auf Komponenten störend einwirkt, welche den Träger (10) umgeben.

## Revendications

1. Appareil de suspension d'essieu comprenant :
une paire de bras gauche et droit (20L, 20R) comportant chacun une partie (22L, 22R) de support de corps de véhicule soutenue sur un corps de véhicule et une partie (26L, 26R) de support de roue soutenant une roue (100L, 100R) ;
une poutre (10) fournie entre lesdits bras gauche et droit (20L, 20R), les deux extrémités de la poutre (10) étant reliées de manière rotative aux bras gauche et droit (20L, 20R) respectifs entre la partie (22L, 22R) du support du corps du véhicule et la partie (26L, 26R) du support de la roue de chaque bras (20L, 20R) ;
des axes de rotation (X1L, X1R) des deux extrémités à la fois de ladite poutre (10) formant des angles par rapport à une ligne reliant les deux extrémités à la fois de ladite poutre (10),
**caractérisé en ce que**
une partie médiane (12) de ladite poutre (10) s'étend le long d'une ligne (X0) reliant lesdites parties (22L, 22R) du support du corps du véhicule.

2. Appareil de suspension d'essieu selon la revendication 1, comprenant en outre un stabilisateur (50) ponté entre lesdits bras gauche et droit (20L, 20R).

3. Appareil de suspension d'essieu selon la revendication 1 ou 2, comprenant en outre une douille (30) fournie entre chaque extrémité de ladite poutre (10) et une extrémité respective parmi lesdits bras gauche et droit (20L, 20R), la douille (30) comprenant un élément élastique qui relie de manière rotative chaque extrémité de ladite poutre (10) à l'extrémité respective parmi lesdits bras gauche et droit (20L, 20R).

4. Appareil de suspension d'essieu selon la revendication 1 ou 2, comprenant en outre un roulement (40) fourni entre chaque extrémité de ladite poutre (10) et une extrémité respective parmi lesdits bras gauche et droit (20L, 20R), le roulement (40) reliant de manière rotative chaque extrémité de ladite poutre (10) à l'extrémité respective parmi lesdits bras gauche et droit (20L, 20R).

5. Appareil de suspension d'essieu selon l'une des revendications 1 à 4, dans lequel ladite poutre (10) est courbée de manière à éviter que ladite poutre (10) interfère avec des composants qui entourent ladite poutre (10).
